# EUROPEAN PATENT SPECIFICATION

(11) **EP 2 239 923 B1**
(45) Date of publication and mention of the grant of the patent: **24.08.2011**
(21) Application number: 09157792.4
(22) Date of filing: 09.04.2009
(51) Int. Cl.: H04L 29/08

(54) **Relay access node with separate control and transport signaling for session-based communications**
Relaiszugangsknoten mit getrennter Steuerung und Transportsignal für sitzungsbasierte Kommunikationen
Noeud d'accès de relais doté d'une commande séparée et de signalisation de transport pour les communications basées sur sessions

(43) Date of publication of application: 13.10.2010
(73) Proprietor: RESEARCH IN MOTION LIMITED, Waterloo, Ontario N2L 3W8 (CA)
(72) Inventor: Preiss, Bruno R., Waterloo Ontario N2L 5Z5 (CA); Son, Giyeong, Waterloo Ontario N2L 5Z5 (CA); Lewis, Allan, Waterloo Ontario N2L 5Z5 (CA)
(74) Representative: MERH-IP Matias Erny Reichl Hoffmann

(56) References cited:
- UZELAC SPEERMINT GLOBAL CROSSING Y LEE COMCAST D SCHWARTZ KAYOTE NETWORKS E KATZ XCONNECT O LENDL ENUM AT R MAHY PLANTRONICS A: "VoIP SIP Peering Use Cases; draft-ietf-speermint-voip-consolidated-us ecases-04.txt" IETF STANDARD-WORKING-DRAFT, INTERNET ENGINEERING TASK FORCE, IETF, CH, vol. speermint, no. 4, 30 November 2007 (2007-11-30), XP015053984 ISSN: 0000-0004
- UZELAC A ET AL: "VoIP SIP Peering Use Cases; draft-ietf-speermint-voip-consolidated-us ecases-11.txt" VOIP SIP PEERING USE CASES; DRAFT-IETF-SPEERMINT-VOIP-CONSOLIDATED-US ECASES-11.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. speermint, no. 11, 17 November 2008 (2008-11-17), XP015059084
- CAMPBELL B ET AL: "The Message Session Relay Protocol (MSRP); rfc4975.txt" IETF STANDARD, INTERNET ENGINEERING TASK FORCE, IETF, CH, 1 September 2007 (2007-09-01), XP015052511 ISSN: 0000-0003
- HOURI IBM E AOKI AOL LLC S PARAMESWAR MICROSOFT CORPORATION A: "Presence & Instant Messaging Peering Use Cases; draft-ietf-speermint-consolidated-presence -im-usecases-05.txt" PRESENCE & INSTANT MESSAGING PEERING USE CASES; DRAFT-IETF-SPEERMINT-CONSOLIDATED-PRESENCE -IM-USECASES-05.TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, vol. speermint, no. 5, 1 June 2008 (2008-06-01), XP015059075

## Description

The present application relates generally to message routing in a message relay system and, more particularly, to implicit registration and session establishment between client devices that do not support session-based communications.

Message relay systems are known in the art for transferring messages between hosted or enterprise servers and wireless mobile devices. Legacy client-server protocols used in such relay systems typically do not support ad hoc or session-based connections between endpoints, such as provided by peer-to-peer (P2P) computer networks. A P2P computer network uses diverse connectivity between participants in a network and the cumulative bandwidth of network participants rather than conventional centralized resources where a relatively low number of servers provide services to clients. Thus, a pure P2P network is not based on clients or servers but uses only equal peer nodes that simultaneously function as both clients and servers to the other nodes on the network.

Overlay networks are also known in the art for providing custom message routing, increased fault tolerance, and special message delivery semantics such as custodial delivery. An overlay network is a computer network that provides functionality on top of another network, and is typically used when the underlying network infrastructure and protocol characteristics do not match application requirements. A number of different approaches have been explored for message routing in overlay networks. One approach adopts a standard layer-3 routing algorithm for use at layer 7 of the OSI layering model (e.g. routing protocols such as Open Shortest Path First (OSPF), Routing Information Protocol (RIP), and Border Gateway Protocol (BGP)). However, layer-3 algorithms do not handle non-hierarchical addressing very efficiently and are not highly scalable. Another approach is to use ad hoc routing in wireless networks. Unfortunately, *ad hoc* routing is not scalable beyond several hundred or several thousand nodes. Yet another approach is to use a routing algorithm that is based on a distributed hash table. However, numerous issues remain to be resolved in connection with manageability and scalability of such distributed hash table systems.

Recent developments in P2P and overlay networks present opportunities for enhanced scalability and reliability in the design and implementation of message relay systems, but are subject to the constraints of legacy client-server protocols, as discussed above.

A IETF standard-working-draft entitled "VoIP SIP Peering Use Cases" relates to SIP peering arrangements in which various SIP domains peer with each other to support an end-to-end SIP-based communications session.

### GENERAL

As discussed in greater detail below, an overlay network is set forth according to an exemplary embodiment for implementing a session-based communication framework over a legacy message relay system in which control signaling and message transport are handled separately. In an exemplary embodiment, SIP (Session Initiation Protocol) may be used to provide application-layer control of message routing. A separate data transport protocol may be used to achieve data transfers between access nodes in the message-routing overlay. In order to support legacy client protocols (which do not support separate control and transport signaling), a mechanism of implicit registration and implicit session establishment is provided. According to the exemplary embodiment, a SIP user agent may perform SIP registration and SIP session establishment on behalf of each non-SIP client (e.g. enterprise server, handheld mobile communication device, etc.) responsive to implicit triggers, in order to effect a desired message routing.

Unlike prior art overlay networks discussed above, the distributed message-routing overlay set forth herein handles non-hierarchical addressing, is scalable to millions of client endpoints, supports client authentication and authorization as well as enabling (billable) QoS mechanism, and also supports legacy client protocols.

In one aspect, the present application may provide a message routing overlay system according to claim 1.

In another aspect, the present application may provide an access node according to claim 5.

In yet another aspect, the present application may provide a method according to claim 8.

Embodiments of the present application are not limited to any particular operating system, mobile device architecture, server architecture, or computer programming language. Other aspects of the present application will be apparent to those of ordinary skill in the art from a review of the following detailed description in conjunction with the drawings.

### BRIEF DESCRIPTION OF THE DRAWINGS

Reference will now be made, by way of example, to the accompanying drawings which show example embodiments of the present application, and in which:

Figure 1 shows, in block diagram form, a prior art message relay system for the control and management of communications between endpoints;

Figure 2 shows, in block diagram form, a message routing overlay network according to an exemplary embodiment;

Figure 3 shows, in block diagram form, details of the message routing overlay network of Figure 2 wherein control signaling and message transport are handled separately;

Figure 4 is a message flow diagram showing an exemplary exchange of messages over the message routing overlay network of Figures 2 and 3 for pushing data from an enterprise server to a handheld mobile communication device; and

Figure 5 is a message flow diagram showing an exemplary exchange of messages over the message routing overlay network of Figures 2 and 3 for sending data from a handheld mobile communication device to an enterprise server.

Similar reference numerals may have been used in different figures to denote similar components.

### DESCRIPTION OF PREFERRED EMBODIMENTS

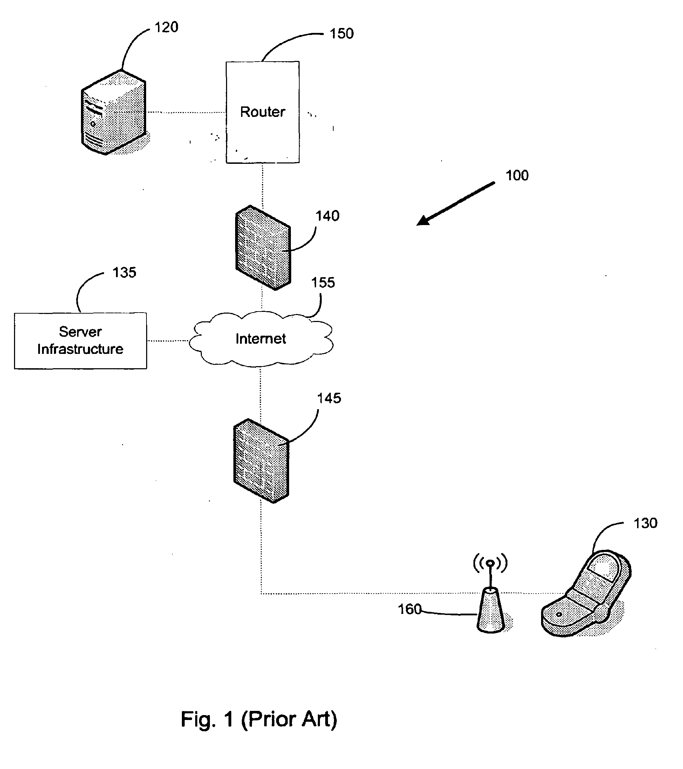

Referring now to Figure 1, a message relay system 100 is shown, according to the prior art, for control and management of communications between endpoints, such as an enterprise server 120 and a handheld mobile communication device 130. The message relay system 100 conforms to a traditional client-server architecture the operation of which would be well known to a person of ordinary skill in the art.

The enterprise server 120 preferably integrates with one or more additional servers (not shown), such as Microsoft Exchange^{®}, IBM^{®} Lotus^{®}, Domino^{®}, Novell^{®} GroupWise^{®}, etc., to enable push-based access to wireless email and data. Enterprise server 120 communicates with a server infrastructure 135 via a router 150 and the Internet 155, through firewall 140. The server infrastructure 135 in turn communicates with a plurality of hand-held mobile communication devices, one such device 130 being illustrated, connected to the server infrastructure 135 through firewall 145 via a wireless network 160 (e.g. GSM/GPRS/EDGE, IDEN, DataTAC, Mobitex, CDMA/EVDO, etc.). Server infrastructure 135 therefore serves as a link between the wired and wireless networks. Data communicated between endpoints (i.e. enterprise server 120 and mobile communication device 130) is preferably encapsulated within messages using a secure protocol (e.g.Secure Multipurpose Internet Mail Extensions (S/MIME)) such that the data remains encrypted at all points between the endpoints (e.g. using FIPS 140-2 validated cryptography).

The message relay system 100 therefore functions essentially as a network of message routing elements that spans the enterprise server 120, the carrier wireless access network 160, server infrastructure 135 and the Internet 155.

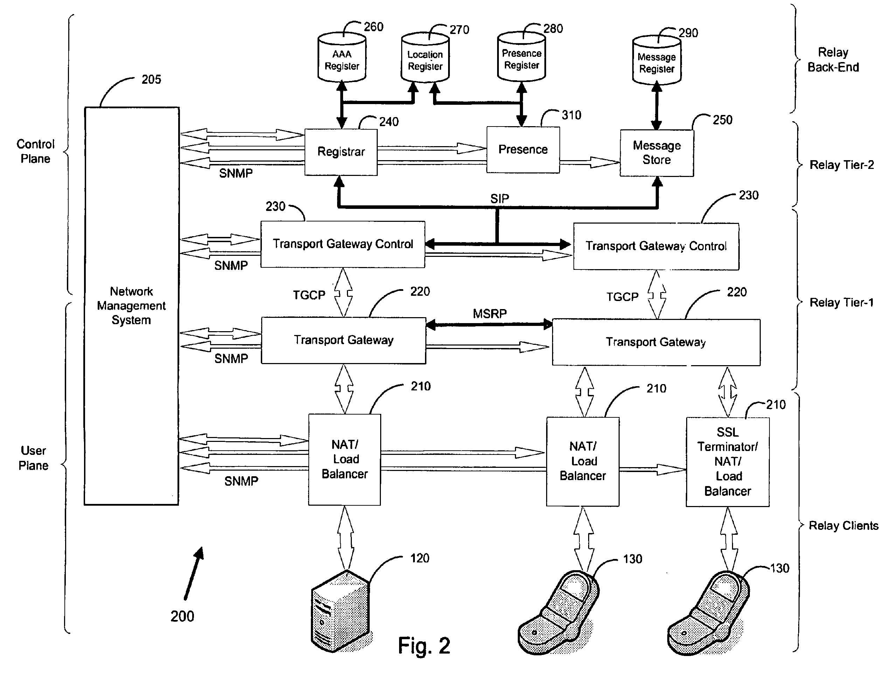

Turning briefly to Figure 2, a message routing overlay system 200 is shown, in accordance with an exemplary embodiment, for control and management of communications between endpoints. The message routing overlay system 200 comprises components in a plurality of functional tiers: Relay Tier-1, Relay Tier-2 and a Relay Back-End, which are separated for the purpose of this application into a Control Plane over which "routing functions" operate, and a User Plane over which "transport functions" operate. The routing functions are those functions that determine what path a message needs to follow through the message routing overlay system 200. The transport functions are those functions relating to reliable transfer of data from one relay component to another within the system 200.

Network Management System 205 functions in a known manner to monitor relay components through the exchange of Simple Network Management Protocol (SNMP) messages, for identifying conditions that require administrative attention.

Within the User Plane, a plurality of Relay Clients, such as enterprise server 120 and handheld mobile communication devices 130, communicate with a plurality of Transport Gateways 220 at associated Relay Tier-1 access nodes, via load balancers 210 for evenly distributing packet traffic across each access node. Data transport between access nodes in Relay Tier-1 (i.e. between the Transport Gateways 220) conforms to a suitable protocol (e.g. Message Session Relay Protocol (MSRP)).

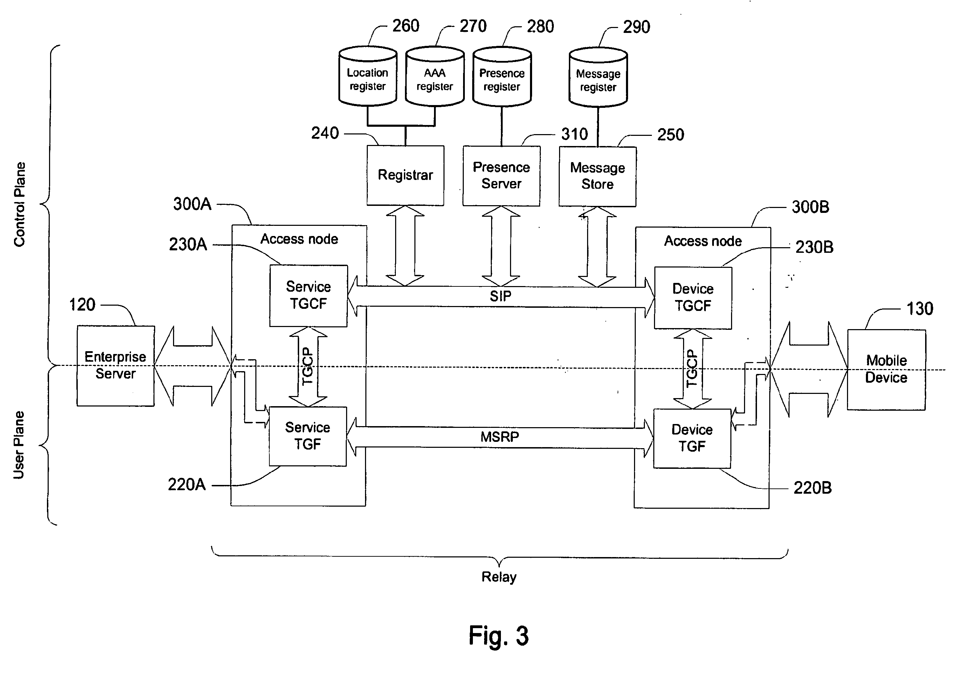

Communication between each endpoint and the associated access node depends on the type of Relay Client. For example, service entities such as enterprise server 120 may use a protocol such as Simple Mail Transfer Protocol (SMTP) or Extensible Messaging and Presence Protocol (XMPP) whereas mobile communication devices 130 may use a protocol such as Reliable UDP. As discussed above, such legacy protocols do not separate control signals from user data. Therefore, according to an aspect of the exemplary embodiment each Relay Tier-1 access node (separately identified in Figure 3 by reference 300) separates the Control Plane and User Plane functions into a transport gateway control function, indicated as Transport Gateway Control 230 and a transport gateway function, indicated as Transport Gateway 220, respectively, as illustrated in Figures 2 and 3.

According to the exemplary embodiment, SIP is used as the Control Plane protocol for communication between access nodes 300 and relay services (Relay Tier-2), such as a Registrar 240, a Message Store 250 and a Presence Server 310 (Figure 3). The central relay services: Registrar 240, Presence Server 310 and a Message Store 250 are supported by associated databases: AAA Register 260, Location Register 270, Presence Register 280 and Message Register 290. The purpose of the Registrar 240 is to manage client location information. The purpose of Presence Server 310 is to support client presence state change notifications. The purpose of the Message Store 250 is to implement message persistence. The AAA Register 260 contains client configuration information and authentication credentials. The Location Register 270 contains client location (point-of-attachment) information. The Presence Register 280 contains presence subscription state information. The Message Register 290 contains messages.

The Service Transport Gateway Control (Service TGCF 230A) implements control plane functions for the access node functioning as handler of connections from Enterprise Servers 120 whereas the Device Transport Gateway Control (Device TGCF 230B) implements control plane functions for the access node functioning as handler of connections from Mobile Devices 130. Each Transport Gateway Control 230 is a 'stateful' function in that it maintains state for each and every session in which it is involved.

As discussed above, the User Plane functions of access nodes 300 include transport gateways, wherein the Service Transport Gateway (Service TGF 220A) implements the data transport functions for the access node functioning as handler of connections from Enterprise Servers 120 while the Device Transport Gateway (Device TGF 220B) implements the data transport functions for the access node functioning as handler of connections from Mobile Devices 130.

According to legacy protocols, relay clients are identified using application-specific identifiers (e.g. Email address in the case of SMPT or Jabber ID in the case of XMPP). However, in order to be used in SIP messages these addressing identifiers must be mapped to URIs. Therefore, according to the exemplary embodiment a SIP URI is generated from the application-specific identifiers according to the following format:sip:<email-address> or sip:<jabber-id>.

The term "session" as used in this specification means a set of two relay clients (e.g. enterprise server 120 and mobile communication device 130) and the data streams passing between them. A session is uniquely identified by the following attributes: the identifier of the relay client in the role of SIP caller, the identifier of the relay client in the role of SIP called party or callee, and the (set of) message payload type(s) carried by the session. A consequence of the foregoing definition of "session" is that the establishment of sessions results in the exchange of routing information between a communicating pair of access nodes. As long as a session is active, each access node for a relay client participating in that session sends messages to the other access node in order to communicate with the other associated relay client. Furthermore, when the session is terminated, the routing information is automatically deleted. By using SIP, routing updates are explicitly signaled in the Control Plane. Caching of routing information is not required, since a session is established whenever a route needs to be discovered. Moreover, because routes are deleted upon session termination, 'stale' routes are not cached.

Since the legacy protocols used by Relay Clients (such as enterprise server 120 and mobile device 130) are stateless (i.e. not session-based), such protocols do not provide any mechanism for session initiation or termination. Therefore, according to an aspect of the exemplary embodiment implicit session registration and implicit session establishment are provided for session initiation and termination. More particularly, a SIP session is initiated in response to an access node 300 receiving the first message with a given source and destination addressing identifier and payload type. Likewise, a session is terminated responsive to a relay access node 300 determining that the traffic for a given source and destination addressing identifier and payload type has stopped, for example, responsive to an explicit-message conforming to the legacy protocol for indicating the end of communication. Alternatively, if the legacy protocol uses a connection-oriented transport protocol (such as TCP), the access node may determine that data traffic has stopped when the transport connection is closed. Otherwise, the access node can use a simple time-out mechanism such that if no traffic has been received for a predetermined period of time, the access node determines that traffic has stopped.

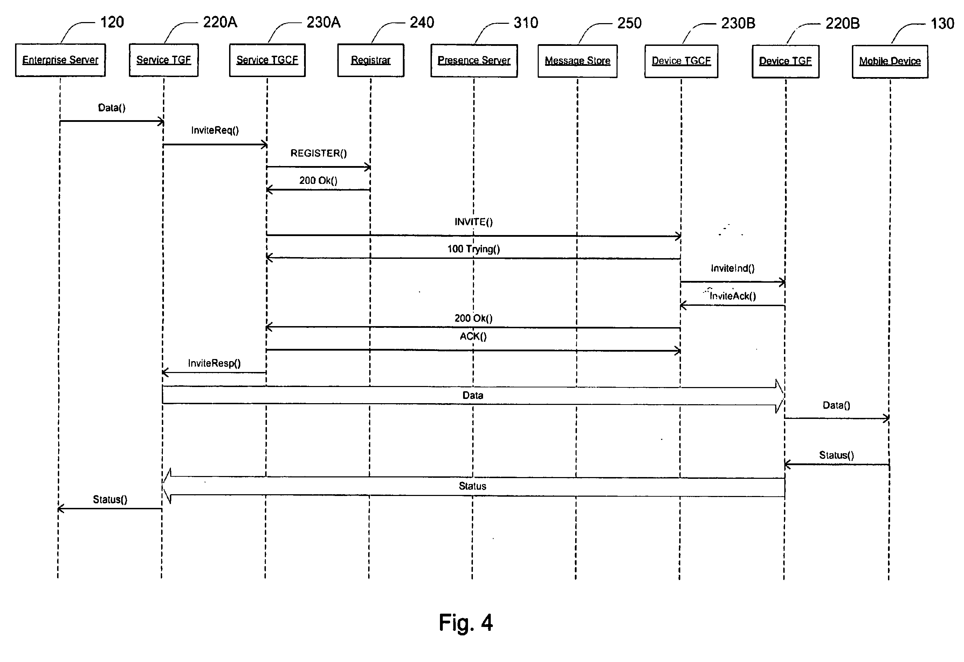

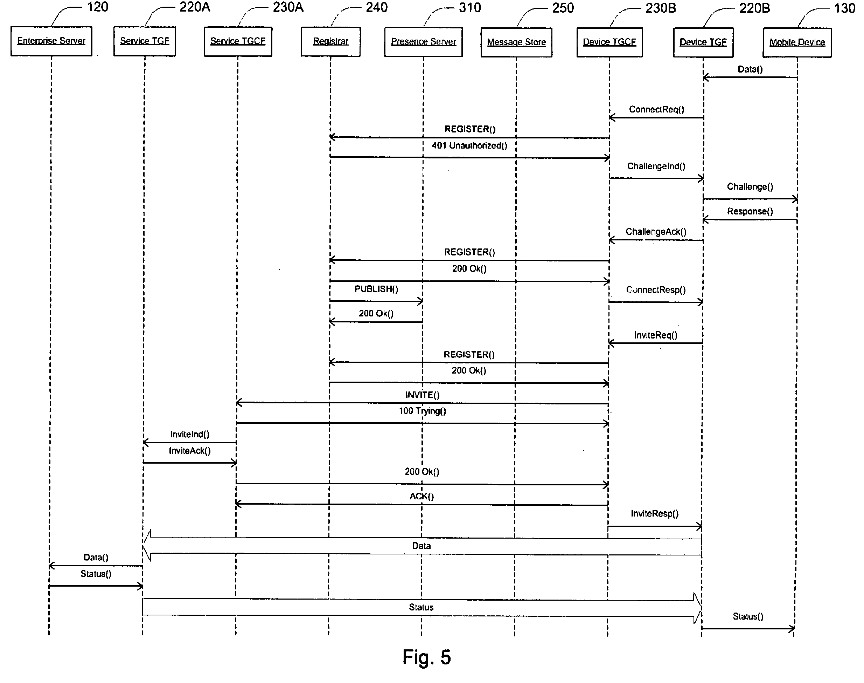

Figures 4 and 5 are message flow diagrams of exemplary message exchanges between relay clients, such as enterprise server 120 and handheld mobile communication device 130. In the following examples and description, enterprise server 120 is identified by identifier=bes123@rim.net, mobile device 130 is identified by identifier=0123abcd@rim.net, the access node 300A for SMTP or XMPP message handling to/from enterprise server 120 is identified as node1.na.rim.net having an IP address 10.1.0.4 and the access node 300B for wireless message transport handling to/from mobile communication device 130 is identified as node2.na.rim.net having an IP address 10.1.0.5. The Registrar 240 is identified by sip:na.rim.net/rf.na.rim.net having an IP address 10.1.0.1; Presence Server 310 is identified by sip:na.rim.net/pf.na.rim.net having an IP address 10.1.0.2; and Message Store 250 is identified by sip:na.rim.net/msf.na.rim.net having an IP address 10.1.0.3.

Figure 4 is a message flow diagram showing an exemplary exchange of messages over the system 200 for pushing data from a service entity relay client, such as enterprise server 120, to handheld mobile communication device 130. The example of pushing data from enterprise server 120 to handheld mobile communication device 130 is exemplary and is described herein to illustrate the implicit registration and implicit session establishment features of the exemplary embodiment. In practice, a multitude of server initiated Control Plane operations may be performed, such as mutual authentication of the server 120 and the system 200, exchanging configuration information between the server 120 and the system 200, requesting and delivering mobile device state change notifications, etc., all of which rely on the implicit registration and implicit session establishment features described in Figure 4.

In response to receiving a first message, denoted in Figure 4 by Data(), from enterprise server 120. The Service TGF 220A issues an invitation, denoted in Figure 4 by InviteReq(), to Service TGCF 230A via Transport Gateway Control Protocol (TGCP), thereby triggering the SIP session establishment procedure. In order for the ingress access node (Service TGCF 220A) to discover the egress access node to which the incoming message should be forwarded, a SIP REGISTER request is generated as a location query to the Registrar 240 (i.e. a SIP REGISTER request without any Contact header, and wherein the To header contains the query target), an example of which is as follows:

```
             REGISTER sip:na.rim.net SIP/2.0
             Via: SIP/2.0/UDP nodel.na.rim.net:5060;branch=z9hG4bKrim17
             Max-Forwards: 70
             To: <sip:1234abcd@rim.net>
             From: <sip:bes123@rim.net>;tag=123417
             Call-ID: 246817@nodel.na.rim.net
             CSeq: 1017 REGISTER
             Content-Length: 0
```

A 200 response from the Registrar 240 returns the result of the location query, wherein the Contact header contains the address of the egress node at which the destination client is currently registered, an example of which is as follows:

```
             SIP/2.0 200 Ok
             Via: SIP/2.0/UDP nodel.na.rim.net:5060;branch=z9hG4bKrim17
              ;received=10.1.0.4
             To: <sip:1234abcd@rim.net>;tag=43217
             From: <sip:besl23@rim.net>;tag=123417
             Call-ID: 246817@nodel.na.rim.net
             CSeq: 1017 REGISTER
             Contact: <sip:1234abcd@10.1.0.5>;q=1.0;expires=3599
             Content-Length: 0
```

The Service TGCF 230A then sends a SIP INVITE to the located egress node (i.e. Device TGCF 230B) to initiate SIP session establishment, an example of which is as follows:

```
             INVITE sip:1234abcd@10.1.0.5 SIP/2.0
             Via: SIP/2.0/UDP nodel.na.rim.net:5060;branch=z9hG4bKrim18
             Max-Forwards: 70
             To: <sip:1234abcd@rim.net>
             From: <sip:besl23@rim.net>;tag=123418
             Call-ID: 246818@nodel.na.rim.net
             CSeq: 1018 INVITE
             Allow: ACK, BYE, CANCEL, INVITE, MESSAG, NOTIFY, OPTIONS, UPDATE
             Supported: timer
             Require: timer
             Session-Expires: 1800;refresher=uac
             Content-Type: application/sdp
             Content-Length: ...
```

```
             v=0
             o=bes123 2890844526 2890844526 IN IP4 10.1.0.4
             s=-
             c-IN IP4 10.1.0.4
             t=0 0
             m=application 40001 tcp msrp
             a=sendrecv
```

It will be noted that SIP session timer support is indicated through Supported, Require and Session-Expires headers and that period refreshes are performed by the Service TGCF 230A in the role of user agent client (i.e. refresher=uac). The body of the INVITE request describes the Service TGCF 230A endpoint of the transport channel (using Session Description Protocol (SDP)), wherein the media type is "application", the port number is 40001, the protocol is "tcp" and the encoding is "msrp".

An optional 100 response indicates that the Device TGCF 230B has received and is processing the SIP INVITE request, for example as follows:

```
            SIP/2.0 100 Trying
            Via: SIP/2.0/UDP nodel.na.rim.net:5060;branch=z9hG4bKrim18
              ;received=10.1.0.4
            To: <sip:1234abcd@rim.net>;tag=432118
            From: <sip:bes123@rim.net>;tag-123418
            Call-ID: 246818@nodel.na.rim.net
            CSeq: 1018 INVITE
            Content-Length: 0
```

A 200 response from the Device TGCF 230B indicates that it is willing to complete the session establishment, for example as follows:

```
             SIP/2.0 200 Ok
             Via: SIP/2.0/UDP nodel.na.rim.net:5060;branch=z9hG4bKrim18
              ;received=10.1.0.4
             To: <sip:1234abcd@rim.net>;tag=432118
             From: <sip:bes123@rim.net>;tag-123418
             Call-ID: 246818@nodel.na.rim.net
             CSeq: 1018 INVITE
             Allow: ACK, BYE, CANCEL, INVITE, MESSAGE, NOTIFY, OPTIONS, UPDATE
             Supported: timer
             Require: timer
             Session-Expires: 1800;refresher=uac
             Content-Type: application/sdp
             Content-Length: ...
```

```
             v=0
             o=1234abcd 2890899527 2890844527 IN IP4 10.1.0.5
             s=-
             c=IN IP4 10.1.0.5
             t=0 0
             m=application 40002 tcp msrp
             a=sendrecv
```

The body of the 200 response describes the Device TGCF 230B endpoint of the transport channel (using Session Description Protocol (SDP)), wherein the media type is "application", the port number is 40002, the protocol is "tcp" and the encoding is "msrp".

The three-way handshaking required for SIP session establishment is completed by a SIP ACK from the Service TGCF 230A to the Device TGCF 230B, an example of which is as follows:

```
             ACK sip:1234abcd@10.1.0.5 SIP/2.0
             Via: SIP/2.0/UDP nodel.na.rim.net:5060;branch-z9hG4bKrim19
             Max-Forwards: 70
             To: <sip:1234abcd@rim.net>;tag=432118
             From: <sip:bes123@rim.net>;tag=123418
             Call-ID: 246818@nodel.na.rim.net
             CSeq: 1019 ACK
             Content-Length: 0
```

Once the SIP session has been established, the transport channel is open such that data and status messages can be exchanged directly between the Service TGF 220A and Device TGF 220B using a suitable protocol (e.g. Message Session Relay Protocol (MSRP)).

Figure 5 is a message flow diagram showing an exemplary exchange of messages over the system 200 for sending data from handheld mobile communication device 130 to the enterprise server 120, when the device is not registered with the system 200 (and therefore there is no existing session), with authentication of the device 130 with the system 200. As with Figure 4, the message exchange of Figure 5 is exemplary and is described herein to illustrate another embodiment of the implicit registration and implicit session establishment features of the exemplary embodiment.

Upon receipt from mobile device 130 of the first data packet at the device TGF 220B, a mutual authentication message exchange sequence occurs. Normally, SIP authentication involves only two REGISTER transactions. The conventional SIP authentication model is extended to three REGISTER transactions, as shown in Figure 5, to accommodate the exchange of authentication messages between the Device TGCF 230B and the Registrar 240.

An example of the first REGISTER request sent from the Device TGCF 230B to Registrar 240 is as follows:

```
             REGISTER sip:na.rim.net SIP/2.0
             Via: SIP/2.0/UDP node2.na.rim.net:5060;branch=z9hG4bKrim40
             Max-Forwards: 70
             To: <sip:1234abcd@rim.net>
             From: <sip:1234abcd@rim.net>;tag-123440
             Call-ID: 246840@node2.na.rim.net
             CSeq: 1040 REGISTER
             Contact: *;expires=0
             Contact: <sip:1234abcd@10.1.0.5>;expires=3600
             Content-Length: 0
             Authorization: GCMPv1 pin="1234abcd"
```

This first REGISTER request has two Contact headers. The first Contact header serves to clear all existing registrations, while the second Contact header contains new registration information. The Authorization header indicates that the device supports and requires authentication.

The Registrar 240 returns a 401 response, an example of which is as follows:

```
             SIP/2.0 401 Unauthorized
             Via: SIP/2.0/UDP node2.na.rim.net:5060;branch=z9hG4bKrim40
              ;received=10.1.0.5
             To: <sip:1234abcd@rim.net>;tag=432140
             From: <sip:1234abcd@rim.net>;tag-123440
             Call-ID: 246840@node2.na.rim.net
             CSeq: 1040 REGISTER
             Content-Length: 0
             WWW-Authenticate: Relay id="1234abcd"
              ,challenge=<relay-challenge>
```

The exemplary 401 response returns an authentication challenge to the Device TGCF 230B. The WWW-Authenticate header contains id and challenge parameters, including a challenge string, ChallengeMessage(), that is sent to the device 130 via Device TGF 220B.

An exemplary second REGISTER request from the Device TGCF 230B to Registrar 240 is as follows:

```
             REGISTER sip:na.rim.net SIP/2.0
             Via: SIP/2.0/UDP node2.na.rim.net:5060;branch=z9hG4bKrim41
             Max-Forwards: 70
             To: <sip:1234abcd@rim.net>
             From: <sip:1234abcd@rim.net>;tag=123441
             Call-ID: 246841@nodel.na.rim.net
             CSeq: 1041 REGISTER
             Contact: *;expires=0
             Contact: <sip:1234abcd@10.1.0.5>;expires=3600
             Content-Length: 0
             Authorization: Relay id="1334abcd"
              ,challenge=<relay-challenge>
              ,response=<device-response>
```

The second REGISTER request carries an Authentication header with three parameters: id, challenge and response. The challenge parameter contains the challenge string that was sent to the device 130 and the response parameter contains the response string generated by the device 130.

The 200 Response from Registrar 240 indicates that the authentication and registration was successful. An example of the 200 Response is as follows:

```
             SIP/2.0 200 Ok
             Via: SIP/2.0/UDP node2.na.rim.net:5060;branch=z9hG4bKrim41
              ;received=10.1.0.5
             To: <sip:1234abcd@rim.net>;tag=432141
             From: <sip:1234abcd@rim.net>;tag=123441
             Call-ID: 246841@nodel.na.rim.net
             CSeq: 1041 REGISTER
             Contact: <sip:1239abcd@10.1.0.5>;expires=3600
             Content-Length: 0
```

Upon completion of the authentication procedure, Registrar 240 publishes the new registration state of handheld device 130 to the Presence Server 310, for example as follows:

```
             PUBLISH sip:1234abcd@rim.net SIP/2.0
             Via: SIP/2.0/UDP rf.na.rim.net:5060;branch=z9hG9bKrim99
             Max-Forwards: 70
             To: <sip:1234abcd@rim.net>
             From: <sip:1334abcd@rim.net>;tag=133999
             Call-ID: 246899@rf.na.rim.net
             CSeq: 9999 PUBLISH
             Event: presence
             Expires: 3600
             Content-Type: application/reginfo+xml
             Content-Length: ...
```

```
             <?xml version="1.0" encoding="UTF-8"?>
             <presence xmlns="urn:ietf:params:xml:ns:pidf"
                     entity="sip:1234abcd@rim.net">
               <tuple id="t0">
                 <status>
                   <basic>open</basic>
                 </status>
               </tuple>
             </presence>
```

The exemplary PUBLISH message contains an XML document in PIDF format that provides the new state of the handheld device 130. In the example above, the state is indicated as "open", thereby indicating that the device 130 is in range of a wireless network 160. The Event header indicates a presence event, while the Expires header indicates the lifetime of the presence information.

An exemplary 200 response from PF 310 to Registrar 240 indicates that the PUBLISH request was successful, as follows;

```
             SIP/2.0 200 Ok
             Via: SIP/2.0/UDP nodel.na.rim.net:5060;branch=z9hG4bKrim99
              ;received=10.1.0.1
             To: <sip:1234abcd@rim.net>;tag=432199
             From: <sip:1234abcd@rim.net>;tag=123499
             Call-ID: 246899@rf.na.rim.net
             SIP-Etag: asdf99
             Expires: 3600
             CSeq: 9999 PUBLISH
             Content-Length: 0
```

Next, the ingress access node (Device TGCF 230B) needs to discover the egress access node to which the handheld data should be forwarded. Accordingly, a Device TGCF 230B sends a SIP REGISTER request to the Registrar 240 to query the location of the egress node. As discussed above in connection with Figure 4, a SIP REGISTER message without any Contact header may be used to query the Registrar, with the query target in the To header, as follows:

```
             REGISTER sip:na.rim.net SIP/2.0
            Via: SIP/2.0/UDP node2.na.rim.net:5060;branch=z9hG4bKrim42
             Max-Forwards: 70
             To: <sip:bes123@rim.net>
             From: <sip:1234abcd@rim.net>;tag=123442
            Call-ID: 246842@node2.na.rim.net
            CSeq: 1042 REGISTER
            Contact: <sip:1234abcd@10.1.0.5>;expires=3600
            Content-Length: 0
```

The 200 response from the Registrar 240 returns the result of the location query, wherein the Contact header contains the address of the egress node at which the destination client is currently registered, an example of which is as follows:

```
             SIP/2.0 200 Ok
            Via: SIP/2.0/UDP node2.na.rim.net:5060;branch=z9hG4bKrim42
              ;received=10.1.0.5
            To: <sip:bes123@rim.net>;tag=432142
             From: <sip:1234abcd@rim.net>;tag-123442
            Call-ID: 1042 REGISTER
            Contact: <sip:bes123@10.1.0.4>;q=1.0;expires=3599
            Content-Length: 0
```

The Device TGCF 230B then sends a SIP INVITE to the located egress node (i.e. Service TGCF 230A) to initiate SIP session establishment, an example of which is as follows:

```
             INVITE sip:bes123010.1.0.4 SIP/2.0
             Via: SIP/2.0/UDP nodel.na.rim.net:5060;branch-z9hG4bKrim43
             Max-Forwards: 70
             To: <sip:bes123@rim.net>
             From: <sip:1234abcd@rim.net>;tag=123443
             Call-ID: 246843@node2.na.rim.net
             CSeq: 1043 INVITE
             Allow: ACK, BYE, CANCEL, INVITE, MESSAGE, NOTIFY, OPTIONS, UPDATE
             Supported: timer
             Content-Type: application/sdp
             Content-Length: ...
```

```
             v=0
             o=bes123 2890844526 2890844526 IN IP4 10.1.0.5
             s=-
             c=IN IP4 10.1.0.5
             t=0 0
             m=application 40002 tcp msrp
             a=sendrecv
```

It will be noted that SIP session timer support is indicated through Supported. The body of the INVITE request describes the Device TGCF 230B endpoint of the transport channel, wherein the media type is "application", the port number is 40002, the protocol is "tcp" and the encoding is "msrp".

An optional 100 response indicates that the Service TGCF 230A has received and is processing the SIP INVITE request, for example as follows:

```
             SIP/2.0 100 Trying
             Via: SIP/2.0/UDP node2.na.rim.net:5060;branch=z9hG4bKrim43
              ;received=10.1.0.5
             To: <sip:bes123@rim.net>;tag=432143
             From: <sip:abcd1234@rim.net>;tag-123443
             Call-ID: 246843@node2.na.rim.net
             CSeq: 1043 INVITE
             Content-Length: 0
```

A 200 response from the Service TGCF 230A indicates that it is willing to complete the session establishment, for example as follows:

```
             SIP/2.0 200 Ok
             Via: SIP/2.0/UDP node3.na.rim.net:5060;branch=z9hG9bKrim93
              ;received=10.1.0.5
             To: <sip:bes123@rim.net>;tag=432143
             From: <sip:abcd1234@rim.net>;tag-123443
             Call-ID: 246843@node2.na.rim.net
             CSeq: 1043 INCITE
             Allow: ACK, BYE, CANCEL, INVITE, MESSAGE, NOTIFY, OPTIONS, UPDATE
             Supported: timer
             Require: timer
             Session-Expires: 1800;refresher=uas
             Content-Type: application/sdp
             Content-Length: ...
```

```
             v=0
             o=1334abc 2890844527 2890844527 IN IP4 10.1.0.4
             s=-
             c=IN IP4 10.1.0.4
             t=0 0
             m-application 40001 tcp msrp
             a=sendrecv
```

The 200 response contains timer support indicated through Supported, Require and Session-Expires headers, wherein Service TGCF 230A is identified as performing periodic refreshes (in the role of user agent server (uas)). The body of the 200 response describes the Service TGCF 230A endpoint of the transport channel, wherein the media type is "application", the port number is 40001, the protocol is "tcp" and the encoding is "msrp".

A SIP acknowledgment (SIP ACK Request) completes the three-way handshaking procedure for SIP session establishment, as follows:

```
             ACK sip:bes123@10.1.0.4 SIP/2.0
             Via: SIP/2.0/UDP node2.na.rim.net:5060;branch=z9hG4bKrim44
             Max-Forwards: 70
             To: <sip:bes123@rim.net>;tag=432144
             From: <sip:1234abcd@rim.net>;tag=123444
             Call-ID: 246820@nodel.na.rim.net
             CSeq: 1044 ACK
             Content-Length: 0
```

Once the SIP session has been established, the transport channel is open such that data and status messages can be exchanged directly between the Service TGF 220A and Device TGF 220B using a suitable protocol (e.g. Message Session Relay Protocol (MSRP)).

Certain adaptations and modifications of the described embodiments can be made. For example, although each message flow (uniquely identified by source and destination addressing identifiers and payload types) is associated with a unique SIP session it is not necessary that each session utilize a separate and distinct transport channel. Instead, since each message flow carries its own addressing identifiers, multiple flows can be multiplexed onto a single transport channel. However, for reasons of efficiency; in the exemplary embodiment all message flows between an ingress access node and an egress access node are carried in a single transport channel (e.g. a single UDP or TCP flow). Thus, a TCP connection can be established between the ingress and egress access nodes when the first SIP session is established such that subsequent SIP sessions between the same pair of nodes use the same TCP connection. In this way, datagram message flow between the pair of access nodes is multiplexed onto the single TCP connection.

Also, although SIP is used in the exemplary embodiment, other session-based communication protocols (e.g. H.323 or as yet un-established protocols) may be used.
The above discussed embodiments are considered to be illustrative and not restrictive.

## Claims

1. A message routing overlay system (200) adapted to control and manage communications between endpoints (120,130), the system comprising:
a plurality of access nodes (300A, 300B) according to claim 5, adapted to communicate with associated endpoints: and
a plurality of relay services (240, 250, 310) adapted to initiate implicit session registration and implicit session establishment between a first one of said access nodes and a second one of said access nodes to initiate said communication session responsive to said first one of said access nodes receiving said source and destination identifiers and payload type from an associated endpoint and terminating said communication session responsive to determining that said transfer of data has stopped.

2. The message routing overlay system of claim 1. wherein said transport gateway control (230A, 230B) incudes a user agent adapted to communicate with said relay services (240, 250, 310) to establish said communication session using Session Initiation Protocol (SIP), and wherein said source and destination identifiers are mapped to SIP Uniform Resource identifiers.

3. The message routing overlay system of claim 1 or claim 2, wherein said plurality of relay services includes a registrar (240) to manage location information relating to said first and second access nodes (300A, 300B), a presence function (310) to support presence state change notifications relating to said first and second access nodes, and a message store (250) to implement message persistence between said first and second access nodes.

4. The message routing overlay system of any one of claims 1 to 3, further including a load balancer (210) intermediate each of said access nodes (300A, 300B) and associated endpoints (120, 130).

5. An access node (300A, 300B) adapted to connect one of either a client (130) or a server (130) to a message relay system (100), the access node comprising:
a transport gateway (220A, 220B) adapted to carry out transport-layer transfer of data between said one of either client or server and said message relay system using a protocol that does not support separate control and transport signaling; and
a transport gateway control (230A, 230B) adapted to carry out application-layer control of message routing of said transfer of data by establishing a communication session that is uniquely identified using source and destination identifiers and payload type of said data.

6. The access node of claim 5, wherein said application-layer control of message routing is in accordance with Session Initiation Protocol (SIP) to locate endpoints (120,130) within said message relay system (100), contact said endpoints to determine willingness to establish said communication session, exchange media information to allow the session to be established, and after said transfer of data tear down said session, and wherein said source and destination identifiers are mapped to SIP Uniform Resource identifiers.

7. The access node of claim 5 or claim 6, wherein said client (130) is a wireless device and said transport gateway control implements control plane functions for said access node functioning as a wireless transport handler.

8. A method of control and management of communications between endpoints (120, 130), the method composing:
receiving data at a first access node (300A, 300B) from a first one of said endpoints (120, 130) using a protocol that does not support separate control and transport signaling;
initiating a communication session between said first access node and a second access node (300A, 300B) associated with a second endpoint (130, 120) using a transport-independent signaling protocol, wherein said session is uniquely identified using source and destination identifiers and payload type of said data received from said first one of said endpoints;
during said communication session between said first access node and said second access node controlling routing of data transfer between said first and second endpoints; and
terminating said communication session responsive to determining that said transfer of data has stopped.

9. The method of claim 8, wherein said transport independent signaling protocol is Session initiation Protocol (SIP) and said source and destination identifiers are mapped to SIP Uniform Resource Identifiers.

10. The method of claim 8 or claim 9, wherein initiating said communication session includes:
transmitting a location query from said access node to a registrar (240) to discover said second access node;
returning a response from said registrar to said first access node (300A, 300B) that contains an address of said second access node;
sending an invitation from said first access node to said second access node (300A, 300B) at said address to initiate said communication session;
sending a further response from said second access node to said first access node indicating willingness to complete establishment of the communication session;
sending an acknowledgement from said first access node to said second access node; and
opening a transport channel for exchanging data directly between said first endpoint and said second endpoint using a further protocol that does not support session-based communications.

11. The method of claim 10, wherein said location query comprises a SIP REGISTER request without any Contact header and containing a query target in a To header thereof.

12. The method of claim 10 or claim 11, wherein said address is contained in a Contact header of said response.

13. The method of any one of claims 10 to 12, wherein said invitation comprises a SIP INVITE including session timers and a description for identifying entity type of said second endpoint.

14. The method of any one of claims 10 to 13, wherein said further response comprises a SIP 200 response containing descriptions for identifying entity types of said first and second endpoints.

15. The method of any one of claims 10 to 14, wherein prior to transmitting said location query said first access node and registrar complete a mutual authentication message exchange sequence.

## Patentansprüche

1. Nachrichtenleit-Überlagerungssystem (200), das dazu ausgelegt ist, Kommunikationen zwischen Endpunkten (120,130) zu verwalten und zu steuern, wobei das System Folgendes aufweist:
eine Vielzahl an Zugangsknoten (300A, 300B) nach Anspruch 5, die dazu ausgelegt sind, mit verknüpften Endpunkten zu kommunizieren, und
eine Vielzahl an Relaisdiensten (240, 250, 310), die dazu ausgelegt sind, implizite Sitzungsregistrierung und impliziten Sitzungsaufbau zwischen einem ersten der Zugangsknoten und einem zweiten der Zugangsknoten einzuleiten, um die Kommunikationssitzung als Reaktion darauf einzuleiten, dass der erste der Zugangsknoten die Quell- und Zielidentifizierer und den Nutzdatentyp von einem verknüpften Endpunkt empfängt und die Kommunikationssitzung als Reaktion auf ein Bestimmen, dass der Datentransfer angehalten halt, beendet.

2. Nachrichtenleit-Übedagenmgssystem nach Anspruch 1, wobei die Transportgatewaysteuerung (230A, 230B) einen Benutzeragenten enthält, der dazu ausgelegt ist, mit den Relaisdiensten (240, 250, 310) zu kommunizieren, um die Kommunikationsssitzung unter Verwendung eines Sitzungseinleitungspmtokolls (Session Initiation Protocol, SIP) aufzubauen, und wobei die Quell- und Zielldentifizierer auf SIP-URI (SIP Uniform Ressource Identifiers) abgebildet werden.

3. Nachrichtenleit-Übedagerungssystem nach Anspruch 1 oder 2, wobei die Vielzahl an Relaisdiensten einen Registerführer (240), um Ortungshformation bezüglich des ersten und des zweiten Zugangsknotens (300A, 300B) zu verwalten, eine Anwesenheitsfunktion (310), um Anwesenheitszustandsänderungs-Mitteilungen bezüglich des ersten und des zweiten Zugangsknotens zu unterstützen, und einen Nachrichtenspeicher (250) enthält, um eine Nachrichtenbeständigkeit zwischen dem ersten und dem zweiten Zugangsknoten zu implementieren.

4. Nachrichtenleit-Überlagerungssystem nach einem der Ansprüche 1 bis 3, das ferner einen Belastungsausgleicher (210) zwischen jedem der Zugangsknoten (300A, 300B) und den verknüpften Endpunkten (120,130) enthält.

5. Zugangsknoten (300A, 3008), der dazu ausgelegt ist, einen aus entweder einem Client (130) oder einem Server (120) mit einem Nachrichtenrelaissystem (100) zu verbinden, wobei der Zugangsknoten Folgendes aufweist;
ein Transportgateway (220A, 220B), das dazu ausgelegt ist, Transportschicht-Transfer von Daten zwischen dem einen aus entweder einem Client oder einem Server und dem Nachrichtenrelaissystem unter Verwendung eines Protons auszuführen, das keine separate Steuer- und Transportsignalisierung unterstützt, und
eine Transportgatewaysteuerung (230A, 230B), die dazu ausgelegt ist, Anwendungsschicht-Steuerung eines Nachrichtenweiterieitens des Datentransfers durch Aufbauen einer Kommunikationssitzung auszuführen, die unter Verwendung von Quell- und Zielidentifizierern und Nutzdatentyp der Daten eindeutig identifiziert ist.

6. Zugangsknoten nach Anspruch 5, wobei die Anwendungsschicht-Steuerung des Nachrichtenweiterleitens gemäß einem Sitzungseinleitungsprotokoll (Session Initiation Protocol, SIP) ist, um Endpunkte (120, 130) innerhalb des Nachrichtenrelaissystems (100) zu orten, die Endpunkte zu kontaktieren, um die Bereitschaft zu bestimmen, die Kommunikationssitzung aufzubauen, Medieninformation auszutauschen, um der Sitzung zu erlauben, aufgebaut zu werden, und nach dem Datentransfer die Sitzung abzubauen, und wobei die Quell- und Zielldentifizierer auf SIP-URI (SIP Uniform Resource Identifiers) abgebildet sind.

7. Zugangsknoten nach Anspruch 5 oder 6, wobei der Client (130) eine drahtlose Vorrichtung ist und die Transportgatewaysteuerung Steuerungsebenenfunktionen für den Zugangsknoten ausführt, der als Drahtlkostransporthandhaber fungiert.

8. Verfahren zum Steuern und Verwalten von Kommunikationen zwischen Endpunkten (120,130), wobei das Verfahren Folgendes aufweist,
Empfangen von Daten an einem ersten Knoten (300A, 300B) von einem ersten der Endpunkte (120,130) unter Verwendung eines Protokolls, das keine separate Steuer- und Transportsignalisierung unterstützt,
Einleiten einer Kommunikationssitzung zwischen dem ersten Zugangsknoten und einem zweiten Zugangsknoten (300A, 300B), der mit dem zweiten Endpunkt (130,120) verknüpft ist, unter Verwendung eines transportunabhängigen Signalisierungsprotokolls, wobei die Sitzung unter Verwendung von Quell- und Zielldentifizierern und Nutzdatentyp der Daten, die vom ersten der Endpunkte empfangen sind, eindeutig identifiziert wird,
Steuern eines Weiterleitens des Datentransfers zwischen dem ersten und dem zweiten Endpunkt während der Kommunikationssitzung zwischen dem ersten Zugangsknoten und dem zweiten Zugangsknoten und
Beenden der Kommunikationssitzung als Reaktion auf das Bestimmen, dass der Transfer angehalten hat.

9. Verfahren nach Anspruch 8, wobei das transportunabhängige Signalisierungsprotokoll ein Sitzungseinleitungsprotokoll (Session Initiation Protocol, SIP) ist und die Quell- und Zielidentifizierer auf SIP-URI "SIP Uniform Resource Identifiers" und die Quell- und Zielldentifizierer auf SIP-URI abgebildet werden.

10. Verfahren nach Anspruch 8 oder 9, wobei das Einleiten der Kommunikationssitzung Folgendes enthält:
Übermitteln einer Ortungsabfrage vom Zugangsknoten an einen Registerführer (240), um den zweiten Zugangsknoten zu entdecken,
Zurückgeben einer Antwort, vom Registerführer an den ersten Zugangsknoten (300A, 300B), der eine Adresse des zweiten Zugangsknoten beinhaltet,
Senden einer Einladung, die Kommunikationssitzung einzuleiten, vom ersten Zugangsknoten an den zweiten Zugangsknoten (300A, 300B) an der Adresse,
Senden einer weiteren Antwort vom zweiten Zugangsknoten an den ersten Zugangsknoten, welche die Bereitschaft anzeigt, einen Aufbau der Kommunikationssitzung abzuschließen,
Senden einer Bestätigung vom ersten Zugangsknoten an den zweiten Zugangsknoten und
Öffnen eines Transportkanals zum Austauschen von Daten direkt zwischen dem ersten Endpunkt und dem zweiten Endpunkt unter Verwendung eines weiteren Protokolls, das auf einer Sitzung basierende Kommunikationen nicht unterstützt.

11. Verfahren nach Anspruch 10, wobei die Ortungsabfrage eine SIP-REGISTER-Anfrage ohne irgendeinen Kontaktkopf aufweist und ein Abfrageziel in einem "To"-Kopf davon beinhaltet.

12. Verfahren nach Anspruch 10 oder 11, wobei die Adresse in einem Kontaktkopf der Antwort beinhaltet ist.

13. Verfahren nach einem der Ansprüche 10 bis 12, wobei die Einladung eine SIP-INVITE, die Sitzungszeitgeber enthält und eine Beschreibung zum Identifizieren eines Entitätentyps des zweiten Endknotens aufweist.

14. Verfahren nach einem der Ansprüche 10 bis 13, wobei die weitere Antwort eine SIP-200-Antwort aufweist, die Beschreibungen zum Identifizieren eines Entitätentyps des ersten und des zweiten Endpunkts.

15. Verfahren nach einem der Ansprüche 10 bis 14, wobei vor der Übermittlung der Ortungsabfrage, der erste Zugangsknoten und der Registerführer eine gegenseitige Authentifizierungs-Nachrichtenaustauschsequenz vollenden.

## Revendications

1. Système logique virtuel pour le routage de messages (200), conçu pour commander et gérer des communications entre des points d'extrémité (120, 130), le système comprenant :
une pluralité de noeuds d'accès (300A, 300B) selon la revendication 5, conçus pour communiquer avec des points d'extrémité associés ; et
une pluralité de services de relayage (240, 250, 310), conçus pour lancer un enregistrement implicite de session et un établissement implicite de session entre un premier desdits noeuds d'accès et un second desdits noeuds d'accès, afin de lancer ladite session de communication à la suite de la réception, par ledit premier desdits noeuds d'accès, desdits identificateurs de source et de destination et du type de charge utile, en provenance d'un point d'extrémité associé, et de la terminaison de ladite session de communication après qu'il a été déterminé que ledit transfert de données avait cessé.

2. Système logique virtuel pour le routage de messages selon la revendication 1, dans lequel ledit moyen de commande de passerelle de transport (230A, 230B) comprend un agent d'utilisateur conçu pour communiquer avec lesdits services de relayage (240, 250, 310) afin d'établir ladite session de communication en utilisant le protocole de lancement de session (SIP) et dans lequel lesdits identificateurs de source et de destination sont mis en correspondance avec des identificateurs uniformes de ressources SIP.

3. Système logique virtuel pour le routage de messages selon la revendication 1 ou la revendication 2, dans lequel ladite pluralité de services de relayage comprend un registre (240) destiné à gérer des informations de position intéressant lesdits premier et second noeuds d'accès (300A, 300B) , une fonction de présence (310) destinée à supporter des notifications de changement d'état de présence intéressant lesdits premier et second noeuds d'accès et une mémoire de messages (250) destinée à assurer la persistance des messages entre lesdits premier et second noeuds d'accès.

4. Système logique virtuel pour le routage de messages selon l'une quelconque des revendications 1 à 3, comprenant en outre un répartiteur de charge (210) placé entre chacun desdits noeuds d'accès (300A, 300B) et des points d'extrémité associés (120, 130).

5. Noeud d'accès (300A, 300B) conçu pour connecter soit un client (130) soit un serveur (120) à un système de relayage de messages (100), le noeud d'accès comprenant :
une passerelle de transport (220A, 220B) conçue pour réaliser un transfert de données dans la couche de transport entre ledit un du client ou du serveur et ledit système de relayage de messages, en utilisant un protocole qui ne supporte pas la signalisation séparée de commande et de transport ; et
un moyen de commande de passerelle de transport (230A, 230B), conçu pour assurer la commande de la couche applicative dans le routage des messages pour ledit transfert de données, en établissant une session de communication qui est identifiée de manière univoque à des identificateurs de source et de destination et du type de charge utile desdites données.

6. Noeud d'accès selon la revendication 5, dans lequel ladite commande de la couche applicative dans le routage des messages s'effectue de manière conforme au protocole SIP afin de localiser des points d'extrémité (120, 130) au sein dudit système de relayage de messages (100), de contacter lesdits points d'extrémité afin de déterminer leur pour établir ladite session de communication, d'échanger des informations sur les supports pour permettre l'établissement de la session et, après ledit transfert des données, clôturer ladite session et dans lequel lesdits identificateurs de source et de destination sont mis en correspondance avec des identificateurs uniformes de ressources SIP.

7. Noeud d'accès selon la revendication 5 ou la revendication 6, dans lequel ledit, client (130) est un dispositif sans fil est ledit moyen de commande de la passerelle de transport met et oeuvre des fonctions de plan de commande afin que ledit noeud d'accès fonctionne comme un gestionnaire de transport sans fil.

8. Procédé de commande et de gestion de communications entre des points d'extrémité (120, 130), le procédé comprenant les étapes consistant à :
recevoir sur un premier noeud d'accès (300A, 300B) des données en provenance un premier des points d'extrémité (120, 130), à l'aide d'un protocole qui ne supporte pas la signalisation séparée de commande et de transport ;
lancer une session de communication entre ledit premier noeud d'accès et un second noeud d'accès (300A, 300B) associé à un second point d'extrémité (130, 120) en utilisant un protocole de signalisation indépendant du transport, dans lequel ladite session est identifiée de manière univoque à l'aide des identificateurs de source et de destination et du type de charge utile desdites données, reçus du premier desdits points d'extrémité;
pendant ladite session de communication entre ledit premier noeud d'accès et ledit second noeud d'accès, commander le routage du transfert de données entre les premier et second points d'extrémité;et
clôturer ladite session de communication après avoir déterminé que ledit transfert de données avait cessé.

9. Procédé selon la revendication 8, dans lequel ledit protocole de signalisation indépendant du transport est le protocole SIP, et dans lequel lesdits identificateurs de source et de destination sont mis en correspondance avec des identificateurs uniformes de ressources SIP.

10. Procédé selon la revendication 8 ou la revendication 9, dans lequel l'étape de lancement de ladite session de communication comprend les étapes consistant à :
émettre une demande de position depuis ledit noeud d'accès vers un registre (240), afin de découvrir ledit second noeud d'accès;
renvoyer audit premier noeud d'accès (300A, 300B), par ledit registre, une réponse qui contient une adresse dudit second noeud d'accès ;
envoyer une invitation depuis ledit premier noeud d'accès vers ledit second noeud d'accès (300A, 300B) à ladite adresse, afin de lancer ladite session de communication ;
envoyer une nouvelle réponse depuis ledit second noeud d'accès vers ledit premier noeud d'accès, indiquant sa disponibilité pour achever l'établissement de la session de communication ;
envoyer un accusé de réception depuis ledit premier noeud d'accès vers ledit second noeud d'accès ; et
ouvrir un canal de transport afin d'échanger directement des donnés entre ledit premier point d'extrémité et ledit second point d'extrémité, en utilisant un autre protocole qui ne supporte pas les communications à base de sessions.

11. Procédé selon la revendication 10, dans lequel ladite demande de position consiste en une demande Registre SIP sans en-tête Contact et contenant une cible de la demande dans son en-tête Destinataire.

12. Procédé selon la revendication 10 ou la revendication 11, dans lequel ladite adresse est contenue dans un en-tête Contact de ladite réponse.

13. Procédé selon l'une quelconque des revendications 10 à 12, dans lequel ladite invitation consiste en un message Invite SIP contenant des compteurs de temps de session et une description destinée à identifier le type d'entité dudit second point d'extrémité.

14. Procédé selon l'une quelconque des revendications 10 à 13, dans lequel ladite nouvelle réponse consiste en une réponse SIP 200 contenant des descriptions destinées à identifier les types d'entité desdits premier et second points d'extrémité.

15. Procédé selon l'une quelconque des revendications 10 à 14, dans lequel, avant l'émission de ladite demande de position, ledit premier noeud d'accès et le registre exécutent une séquence d'échanges mutuels de messages d'authentification.
